# EUROPÄISCHE PATENTSCHRIFT

(11) **EP 0 389 793 B1**
(45) Veröffentlichungstag und Bekanntmachung des Hinweises auf die Patenterteilung: **12.07.1995**
(21) Anmeldenummer: 90103418.1
(22) Anmeldetag: 22.02.1990
(51) Int. Cl.: B29C 65/74, B29C 53/36

(54) **Verfahren und Vorrichtung zur Herstellung einer Schar paralleler, insbesondere gemusterter, Etikettbänder**
Method and apparatus for producing a set of parallel, especially patterned, label bands
Procédé et appareil de fabrication d'un ensemble de bandes parallèles d'étiquettes, en particulier avec motifs

(30) Priorität: 30.03.1989 DE 3910218
(43) Veröffentlichungstag der Anmeldung: 03.10.1990
(73) Patentinhaber: VAUPEL TEXTILMASCHINEN KG, D-42277 Wuppertal (DE)
(72) Erfinder: Diesner, Willi, D-7886 Murg-Hänner (DE)
(74) Vertreter: Mentzel, Norbert, Dipl.-Phys.

(56) Entgegenhaltungen:
- EP-A- 0 043 044
- DE-A- 3 000 686
- DE-C- 53 344
- FR-A- 2 273 745
- GB-A- 1 030 484
- US-A- 2 740 457
- US-A- 2 781 079
- US-A- 4 318 768

## Beschreibung

Die Erfindung richtet sich auf ein Verfahren der im Oberbegriff des Anspruches 1 angegebenen Art, sowie auf eine Vorrichtung gemäß dem Oberbegriff des Anspruchs 12. Ein solches Verfahren und eine solche Vorrichtung sind aus der DE-C-21 00 835 bekannt.

Bei dem bekannten Verfahren (DE-OS 21 00 835), wo die Etikettbänder als Streifen aus einer Textilbahn herausgeschnitten werden, macht man sich die Schmelzfähigkeit der modernen Fadenwerkstoffe nutzbar. Damit die geschnittenen Streifen an ihren Kanten nicht ausfransen, werden dabei beheizte Drähte verwendet, die Trennschnitte durch Schmelzen des Fadenmaterials erzeugen und zugleich beidrandseitig Schmelzkanten an den einzelnen Streifen entstehen lassen. Diese Schmelzkanten werden noch auf der Textilmaschine gebildet, bevor die Streifen den Warenabzug erreichen, wo sie sich vereinzeln und daher, ohne diese Schmelzbefestigung, an ihren Kanten beschädigt werden könnten.

Durch die an der Schnittstelle anfallenden Schmelzmassen entstehen aber bei dem bekannten Verfahren verhältnismäßig harte und rauhe Schmelzkanten an den Streifen. Im Extremfall erhalten diese Schmelzkanten sogar ein Zahnprofil. Das wirkt sich nicht nur unangenehm beim Tragen solcher Etiketten aus, sondern führt auch zu Beschädigungen an Kleidungsstücken oder Reibungsstellen am menschlichen Körper. In jedem Fall ist der Tragekomfort von Kleidungsstücken beeinträchtigt, die mit solchen Etiketten ausgerüstet werden.

Aus der EP-A-0 043 044 ist bekannt, die an den Schnittstellen von Etiketten anfallenden Schmelzkanten durch Umlegen und Befestigen der entsprechenden Randbereiche auf der Bandrückseite zu entschärfen; dabei werden Etiketten aus einem fertigen Etikettenband hergestellt, in dem man die Etiketten entsprechend ihrem Rapport, quer zum Bahnverlauf, mittels eines beheizten Messers durchschneidet, danach umfaltet, bügelt, und schließlich die umgelegten Etikettenden durch eine Ultraschallschweißeinrichtung am Bandkörper befestigt.

Der Erfindung liegt zunächst die Aufgabe zugrunde, ein zuverlässiges, einfach auszuführendes Verfahren der eingangs erwähnten Art zu entwickeln, bei dem die aus der Textilbahn geschnittenen Streifen zwar einwandfreie, durch Schmelzvorgänge ausfransungssichere Kanten aufweisen, die Bandkanten aber dennoch weich bleiben und sich durch angenehme Trageeigenschaften auszeichnen. Dies wird erfindungsgemäß durch die im Kennzeichen des Anspruches 1 angeführten Verfahrensschritte erreicht, denen folgende besondere Bedeutung zukommt.

Die Erfindung hat erkannt, daß es nutzlos ist, an den Schmelzkanten zu experimentieren, um sie zu entschärfen. Sehr viel einfacher ist es nämlich, den anfallenden, mit Schmelzkanten versehenen Streifen einfach die Funktion von Vorprodukten zu geben, die eine gegenüber dem Endprodukt etwas größere Breite aufweisen und diese dann folgendermaßen nachzubehandeln. Die einzelnen Streifen werden randseitig umgelegt und erhalten dadurch erst die gewünschte endgültige Bandbreite. Die umgelegten Randbereiche werden auf der Bandrückseite befestigt, wofür vorzugsweise Schmelzwärme verwendet wird. Das Schmelzmaterial dazu liefern die Faltschenkel, insbesondere dort eingearbeitete Sonderfäden aus Material niedrigerer Schmelztemperatur, und/oder die vorher gebildeten Schmelzkanten, wobei das Schmelzmaterial in die Gewebeporen des Grundbandes eindringt. Durch den Saugeffekt der Gewebeporen verschwindet sogar rückseitig die harte Schmelzkante. Das Endprodukt wird durchgehend weich. Auch wenn eine getrennte Behandlung möglich ist, ist es vorteilhaft, diese Vorgänge im Zuge der Produktion der Breitbahn zwischen ihrer Herstellungsstelle und ihrer Abzugsstelle auszuführen. Die Spannung der Textilbreitbahn wird nicht nur beim Schmelzschneiden genutzt, sondern auch beim Falten, Andrücken und Befestigen, insbesondere Schmelzbefestigen, der Randbereiche der einzelnen Streifen. Die Bahn-Spannung fördert die Knickung des Vorprodukts im Faltenscheitel. Im fertigen Bandprodukt erhält man weiche und saubere Kanten. Man kommt mit minimalen Umlegungen der Randbereiche von 1 oder 2 mm aus. Der Streifen als Vorprodukt braucht nur unwesentlich breiter als das Endprodukt zu sein, z. B. ein fertiges Etikettenband. Der Mehraufwand an Fadenmaterial ist also gering.

Das erfindungsgemäße Endprodukt hat durch die randseitige Faltung das Aussehen eines mit einer Hohlkante ausgerüsteten Bandes, wie es bislang mit wesentlich größerem webtechnischen Aufwand auf einem Bandwebstuhl hergestellt werden mußte. Weitere vorteilhafte Maßnahmen des erfindungsgemäßen Verfahrens sind aus den Ansprüchen 2 bis 11, der nachfolgenden Beschreibung und den Zeichnungen zu entnehmen.

Die Erfindung richtet sich auch auf eine Vorrichtung zur Durchführung des Verfahrens, deren Besonderheit aus den im Kennzeichen des Anspruches 12 angeführten Maßnahmen zu ersehen ist. Weitere vorteilhafte Maßnahmen der Vorrichtung sind in den Ansprüchen 13 bis 20 verwirklicht, die in den Zeichnungen und der nachfolgenden Beschreibung näher erläutert sind.

In den Zeichnungen ist die Erfindung in mehreren Ausführungsbeispielen dargestellt. Es zeigen:
- Fig. 1: schematisch einen ersten Verfahrensschritt zur textilen Herstellung eines bei der Erfindung anfallenden Vorprodukts, und zwar durch Weben,
- Fig. 2 und 3: schematisch, in übertriebener Darstellung sowie im Ausbruch, Schnittansichten durch die Textilbahn von Fig. 1 längs den Schnittlinien II-II bzw. III-III,
- Fig. 4 , 5 und 6: in einer gegenüber Fig. 2 vereinfachten Darstellung Schnittansichten durch das Produkt während drei weiterer, sich an Fig. 3 anschließender Verfahrensschritte bis zur Herstellung des Endprodukts,
- Fig. 7: eine alternative Ausgestaltung eines Vorprodukts in einer zu Fig. 2 analogen Darstellung,
- Fig. 8: in schematischer Seitenansicht eine erste erfindungsgemäße Vorrichtung zur Durchführung des Verfahrens von Fig. 4 bis 6,
- Fig. 9: die Draufsicht auf die Vorrichtung von Fig. 8,
- Fig.10: die Ansicht eines bei Fig. 8 und 9 verwendeten Bauteils,
- Fig.11: eine Seitenansicht einer zweiten Ausführungsform der erfindungsgemäßen Vorrichtung,
- Fig.12: die Seitenansicht eines bei der Vorrichtung von Fig. 11 verwendeten Schmelzschneiders annähernd im natürlichen Maßstab,
- Fig.13: in Vergrößerung eine Schnittansicht durch ein Detail von Fig. 12 längs der dortigen Schnittlinie XIII-XIII mit angrenzenden, vorgefalteten Streifen,
- Fig.14: in Vergrößerung die Draufsicht auf ein Teilstück eines weiteren in Fig. 12 verwendeten Bestandteils,
- Fig.15: die Seitenansicht eines bei der Vorrichtung von Fig. 11 verwendeten Werkzeugs etwa in natürlichem Maßstab und
- Fig.16: die Draufsicht auf das Werkzeug von Fig. 15 zusammen mit zwei angrenzenden Vorprodukten, die dort im Randbereich behandelt werden.

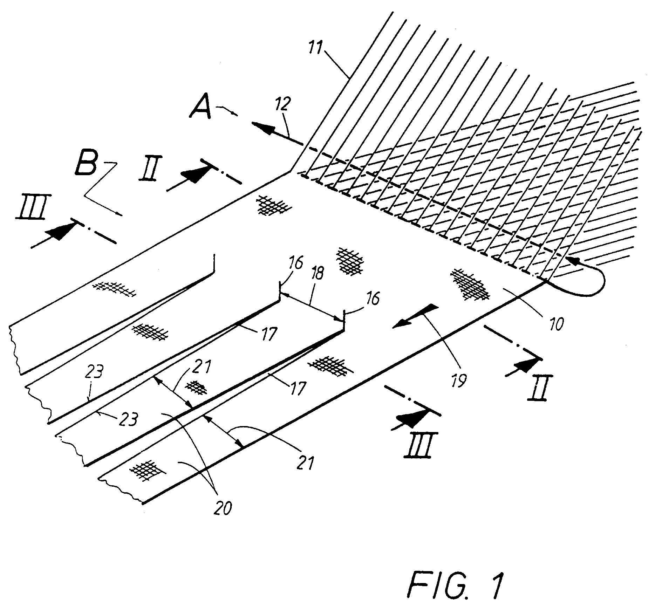

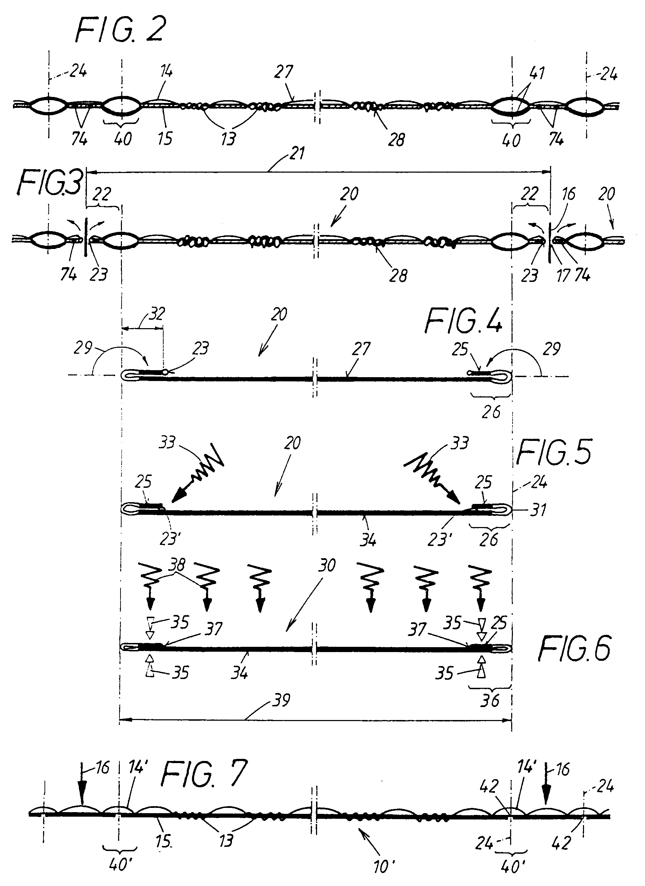

In Fig. 1 ist als Textilbahn 10 zwar ein Breitgewebe verdeutlicht, doch können stattdessen auch Textilbahnen anderer Art, z. B. eine Wirkware, vorliegen. Das Breitgewebe entsteht aus einer Bindung von Kettfäden 11 mit mehreren, über die ganze Bahnbreite durchgehenden Schußfäden, die einen Grundschuß 12 und mehrere, farblich unterschiedliche, aus Fig. 2 erkennbare Figurschüsse 14 aufweisen. Diese Webstelle ist mit A bezeichnet. Mit dem Grundschuß 12 wird ein Grundgewebe 15 erzeugt und mit den Figurschüssen 14 auf der Schauseite 28 des Grundgewebes 15 Webmuster 13, zwischen denen die Figurschüsse 14 auf der Geweberückseite 27 flottierend verlaufen. Die farbigen Webmuster 13 erstrecken sich in Bewegungsrichtung 19 der Textilbahn 10 und bilden aufeinanderfolgende Etiketten.

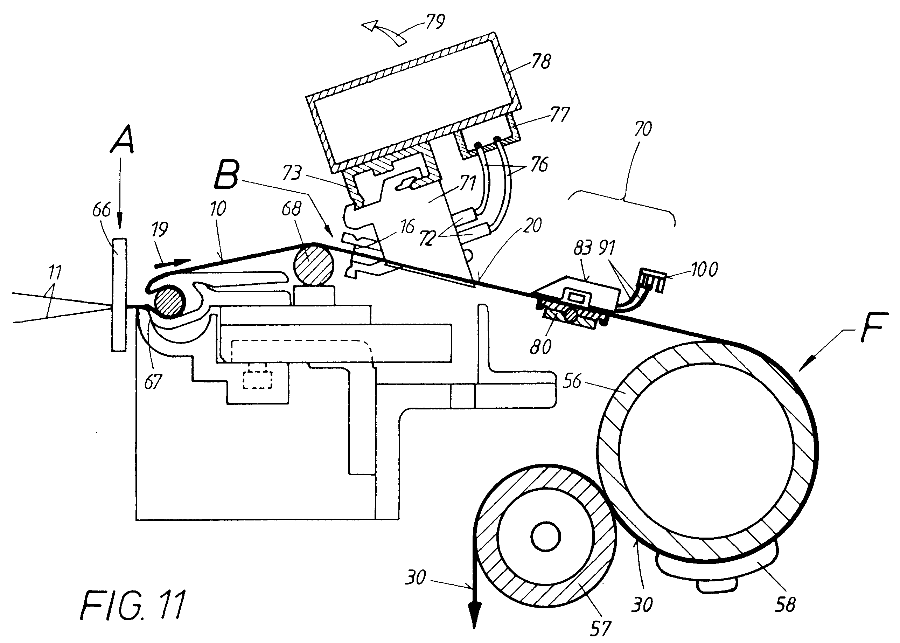

Gemäß Fig. 1 durchläuft das Breitgewebe 10 eine Schar von Schnittstellen 16, die aus einer Schar von hier schematisch angedeuteten beheizten Drähten 16 bestehen und in einem definierten Abstand 18 zueinander angeordnet sind. Das Fadenmaterial 11, 12, 14 besteht aus schmelzfähigem Werkstoff. Wird die Textilbahn 10 im Sinne des Pfeils 19 beim Weben abgezogen, so erzeugen die beheizten Drähte Schmelzschnitte 17, zwischen denen Streifen 20 definierter Breite 21 entstehen. Diese Schneidstelle ist mit B bezeichnet. Beidseitig einer solchen Schnittlinie entstehen an den Streifen 20 die in Fig. 3 erkennbaren Kanten 23 aus Schmelzmaterial, die zwar ein Ausfransen der Fäden verhindern, aber aufgrund ihrer Verfestigung relativ hart sind und sogar ein Sägezahnprofil aufweisen können. Wie in Fig. 2 und 3 angedeutet ist, können in den Randbereichen 22 der Streifen 20 einer oder mehrere Sonderfäden 74 im Grundgewebe 15 eingewebt sein, die in Richtung der Kettfäden 11 verlaufen und aus einem Material bestehen, welches gegenüber dem übrigen Fadenwerkstoff 11, 12, 14 eine niedrigere Schmelztemperatur aufweist. Die Sonderfäden 74 werden bei der Vorrichtung gemäß Fig. 11 bis 16 benutzt. Die Streifen 20 erzeugen nur ein Vorprodukt, das in folgender, aus Fig. 4 bis 6 ersichtlichen Weise zu dem Endprodukt 30 weiterbehandelt wird, nämlich dem Etikettband 30.

Die an der Schmeltzkante 23 angrenzenden schmalen Randbereiche 22 der einzelnen Streifen 20 werden entlang einer kantenparallelen, strichpunktiert in Fig. 3 bis 6 angedeuteten Faltlinie 24 im Sinne der Pfeile 29 umgelegt. Dadurch entsteht an der Faltlinie 24 ein Faltscheitel 31 und der Randbereich 22 bildet jeweils einen Faltschenkel 25, der auf der Rückseite 27 des Vorprodukts in der Nachbarzone 26 zur Anlage kommt. Entsprechend der Länge des Faltschenkels 25 kommt die Schmelzkante 23 gemäß Fig. 4 in einem Randabstand 32 zu liegen.

Gemäß Fig. 5 wird der Faltschenkel 25 an der Nachbarzone 26 befestigt. Dies geschieht durch Kleben. Im vorliegenden Fall wird hierzu die Schmelzeigenschaft des Fadenmaterials, z. B. die des Sonderfadens 74 benutzt, weshalb die Befestigung durch Schmelzkleben entsteht. Diese Befestigung erfolgt vorzugsweise vollflächig mit dem Fadenmaterial des Streifenrandbereichs 22 und erzeugt einen Klebebereich 37 gemäß Fig. 6. Es können aber auch zusätzliche Klebemittel verwendet werden, die beim Um falten 29 zwischen den Faltenschenkel 25 und die Nachbarzone 26 eingelegt werden, wie einer oder mehrere Schmelzfäden oder ein Schmelzbändchen. Im vorliegenden Fall wird, wie aus Fig. 5 hervorgeht, eine punktuelle Wärmeeinwirkung 33 auf die rückgefaltete Streifenkante 23 ausgeübt, wodurch sich der dortige Schmelzwerkstoff, wie bei 23' angedeutet, wieder verflüssigt. Dabei können natürlich auch angrenzende Bereiche des Fadenmaterials mitverflüssigt werden. Das flüssige Material 23' wird nun in die Nachbarzone 26 des darunterliegenden Bandkörpers 34 eingesaugt, vor allem, wenn die aus Fig. 6 ersichtliche Pressung im Sinne der Pfeile 35 auf die so gebildeten Randzonen 36 ausgeübt wird. Das flüssige Klebemittel 23' wird in die Fuge der Faltung eingepreßt und dringt in die Gewebeporen ein. Die störende Schmelzkante 23 ist verschwunden und in eine flächige Klebestelle umgewandelt worden. Das Schmelzmaterial ist in den feinen Gewebeporen verankert. In jedem Fall ist aber die erzeugte Knickkante 31 weich und durch die doppellagige Ausbildung aufgrund der Faltschenkel 25 sogar verstärkt. Man erhält eine weiche und stabile Randzone 36.

Gleichzeitig mit der Wärmebehandlung 33 oder auch nachträglich wird das so erlangte Band 30 noch einer durch die Wärme-Pfeile 38 veranschaulichten Wärmebehandlung unterzogen. Diese wird vorzugsweise über die ganze Bandbreite 39 ausgeübt, wodurch das Endprodukt geglättet und fixiert wird. Alternativ oder zusätzlich kann ein solches Band auch noch einer Appretur unterzogen werden.

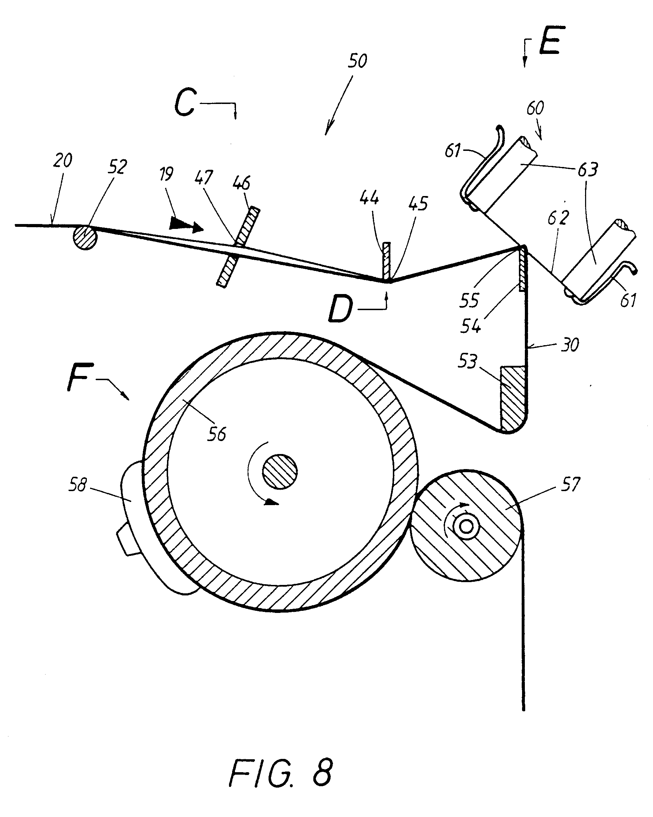

Die Wärmeeinwirkung 33 bzw. 38 in der Randzone 36 kann in jeder an sich bekannten Weise erfolgen, z. B. durch Kontaktwärme über Bügeleisen oder Preßrollen, wofür die Vorrichtung nach Fig. 8 bis 10 einerseits und Fig. 11 bis 16 andererseits Beispiele zeigen. Die Wärmeeinwirkung könnte aber auch durch elektromagnetische Strahlung erfolgen, z. B. Infrarotlicht. Auch Ultraschall oder Heißluft könnte an den gewünschten Stellen des Produkts erwärmen. Man braucht sich dabei nicht auf die Schweißfähigkeit des Fadenmaterials 11, 12, 14, 74 stützen, vielmehr könnte man solchen Schmelzwerkstoff durch Aufstreuen von Pulver oder, in flüssiger Form, durch Tränken des Gewebes aufbringen. Die Befestigung der Faltschenkel 25 könnte auch durch chemische Klebstoffe erfolgen. Die Wahl dieser Mittel hängt von der Art und der Verwendung des Endprodukts 30 ab.

In manchen Fällen empfiehlt es sich, diejenigen Zonen der Textilbahn 10, wo die Faltlinien 24 zu liegen kommen, für eine Knickung besonders geeignet auszubilden, wofür die Fig. 2 und 3 einerseits und Fig. 7 andererseits zwei Alternativen zeigen. Im Falle von Fig. 2 und 3 ist diese Zone als Hohlgewebe 40 ausgebildet, also als ein Schlauch mit den beiden Gewebelagen 41. Wegen dieser Doppel-Lagigkeit 41 ergibt sich eine leichtere Knickung und eine sauberere Kante 31 im Faltscheitel.

Bei der Alternative von Fig. 7 ist das Grundgewebe 15 im Bereich der auch dort strichpunktiert angedeuteten Faltlinie 24 geschwächt ausgebildet. Dazu kann an dieser Stelle eine verdünnte Gewebezone 42 vorliegen, was am einfachsten durch eine geringere Anzahl von Kettfäden 11 an dieser Stelle 42 der Textilbahn 10' geschieht. So werden beispielsweise an dieser Stelle 42 in dem aus Fig. 11 ersichtlichen Riet 66 der Webmaschine keine Kettfäden eingezogen; es entsteht dort ein leerer "Rietstich". Eine Erleichterung der Knickung könnte schließlich auch durch Entfernen der in dieser Zone 40' flottierend auf der Rückseite des Grundgewebes verlaufenden Figurschüssen 14' erfolgen, z. B. durch Wegbrennen oder Wegschmelzen dieser Fadenteile.

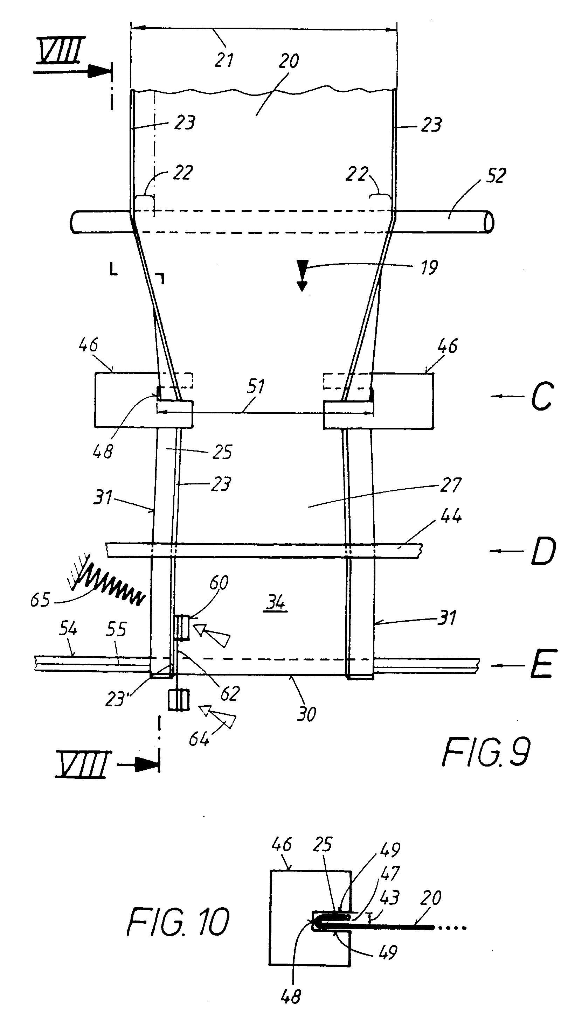

Die Fig. 8 und 9 zeigen eine Vorrichtung zur Durchführung der Verfahrensschritte von Fig. 4 bis 6. Diese Vorrichtung ist in die Webmaschine von Fig. 1 integriert, könnte aber auch davon unabhängig verwirklicht sein. Im vorliegenden Fall bilden die Fig. 8 und 9 also die Fortsetzung der Fig. 1. Es genügt, einen Streifen 20 zu betrachten. Dieser läuft von einer Umlenkstange 52 zu einer ersten Führungsleiste 44, die mit ihrer Unterkante 45 eine scharfe Umlenkung im Streifenverlauf erzeugt. In diesem Abschnitt durchläuft der Streifen 20 eine aus Fig. 10 ersichtliche Schlitzblende 46, die einen Schlitz 47 aufweist und in spiegelbildlicher Weise an beiden Längskanten 23 des Streifens 20 angeordnet ist. Der Schlitz 47 dient mit seinen Seitenwänden 49 als Leitfläche zum Umfalten des jeweiligen Randbereichs 22, wobei am Schlitzgrund 48 der bereits erwähnte Faltscheitel 31 entsteht. Der Abstand 51 zwischen dem Schlitzgrund 48 der beidseitigen Blenden 46 ist gegenüber der vorausgehenden Streifenbreite 21 kleiner ausgebildet, weshalb es zu einer leichten Stauchung des Streifens kommt. Die Schlitzhöhe 43 ist so gering bemessen, daß die Faltschenkel 25 rückgefaltet werden. Diese Faltstelle ist in Fig. 8 und 9 mit C bezeichnet. An der mit D bezeichneten Stelle, nämlich an der Umlenkkante 45, wird der Faltschenkel 25 an den Bandkörper 34 angedrückt. Durch den weiteren Z-förmigen Verlauf wird das Andrücken an der Umlenkkante 55 einer zweiten Führungsleiste 54 wiederholt. Von dort verläuft das Produkt über einen Brustbaum 53 zu einer Abzugswalze 56, welche mit einer Andruckrolle 57 zusammenwirkt. Die Abzugsstelle ist mit F bezeichnet. An der mit E bezeichneten Stelle dieser Vorrichtung erfolgt die Faltenbefestigung, wofür im vorliegenden Fall Kontaktwärme zum Schmelzen des Fadenmaterials im Bereich des Faltschenkels 25 benutzt wird.

Dazu dient ein Heizglied 60. Dieses besteht hier aus einem Heizdraht 62 an einem Halter 63, der über Zuleitungen 61 elektrisch erwärmt wird. In diesem Fall wirkt der Heizdraht unmittelbar auf die umgelegte Schmelzkante 23 und weicht diese auf. Der Heizdraht 62 wird im Sinne der Pfeile 64 z. B. über Zugfedern 65 angedrückt. Hinter der Führungsleiste 54 liegt das fertige Band 30 mit umgelegtem und befestigtem Faltschenkel 25 vor. An der Abzugswalze 56 kann noch eine Fixiereinrichtung 58 angeordnet sein, die das Endprodukt 30 einer abschließenden, mäßigen Wärmebehandlung unterzieht und durch Andruck das Band glättet. Wie bereits erwähnt wurde, kann die Vorrichtung 50 von Fig. 8 und 9 auch unabhängig von einer Webmaschine zur Nachbehandlung solcher Streifen 20 genutzt werden.

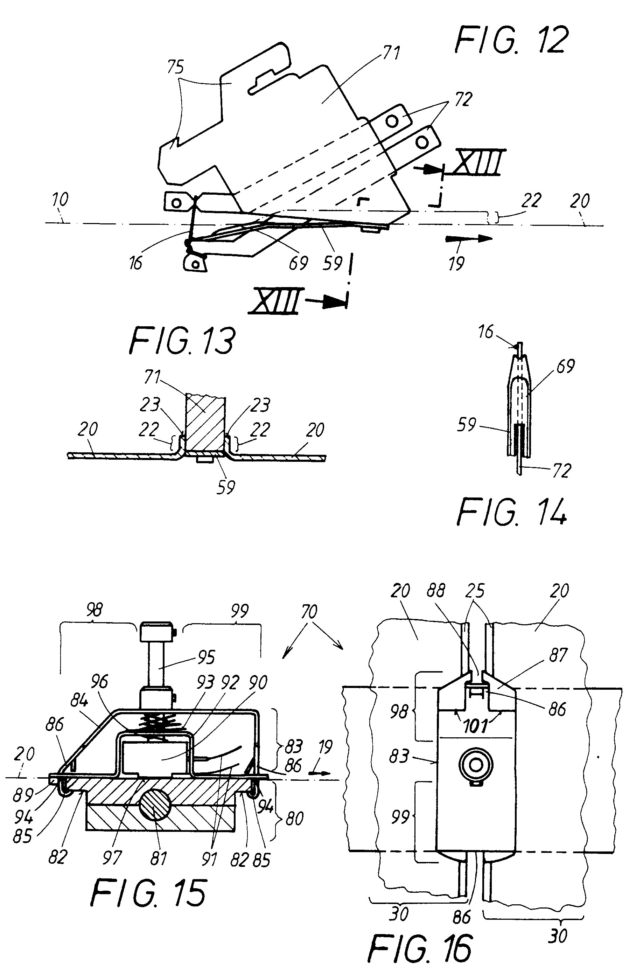

Die Fig. 11 bis 16 zeigen eine Alternative, wo Einrichtungen zum Falten, Pressen und Kleben zu einem Kombinationswerkzeug 70 zusammengefaßt sind und wo eine einleitende Vorfaltung bereits im Bereich eines Halters 71 für einen beheizten Draht 16 erfolgt. Auch hier ist das Kombinationswerkzeug 70 und der Draht-Halter 71, gemäß Fig. 11, in die Webmaschine integriert und befindet sich zwischen der durch einen Webriet 66 gekennzeichneten Webstelle A und der durch die Walze 56 und Rolle 57 gekennzeichnete Abzugsstelle F. Hinter der Webstelle A wird das Breitgewebe 10 nach Durchlauf eines Gewebebreithalters 67 zu der Schneidstelle B geführt, deren Aussehen in Fig. 12 näher gezeigt ist. Die Halter 71 bestehen aus einem Kunststoffteil, welches über Klauen 75 an einer aus Fig. 11 ersichtlichen Montageschiene 73 sitzt, die sich quer zur durch den Pfeil 19 gekennzeichneten Bewegungsrichtung des Breitgewebes 10 beim Weben erstreckt. Entlang der Montageschiene 73 sind die Halter 71 verschiebbar, um den gewünschten, aus Fig. 1 ersichtlichen Abstand 18 zwischen den beheizten Drähten 16 zu erzeugen. Der Draht 16 sitzt an zwei elektrischen Leitern 72, die im Kunststoff des Halters 71 eingebettet sind und über Verbindungskabel 76 mit einer elektrischen Kontaktschiene 77 verbunden sind. Ist der gewünschte Abstand 18 eingestellt, so werden die Halter 71 in dieser Position an der Montageschiene 73 festgelegt. Die Montageschiene 73 und die Kontaktschiene 77 sind an einem Träger 78 befestigt, die über Schwenkarme am Gestell und der Webmaschine befestigt ist und sich im Ruhezustand der Maschine im Sinne des Schwenkpfeils 79 in eine unwirksame Stellung oberhalb des Gewebes 10 emporschwenken läßt. In Arbeitsstellung erfüllt der Halter 71 auch die Aufgabe einer teilweisen Vorfaltung der Streifenrandbereiche 22, wozu die aus Fig. 13 und 14 ersichtlichen Bestandteile beitragen.

An der Unterseite des Halters 71 befindet sich eine schmale Zunge 59, die an ihrem hinteren Ende am Halter durch eine Schraube od. dgl. befestigt ist und sich mit ihrem vorderen, ausweislich der Fig. 14 zugespitzen freien Ende vom Halter 71 entfernt. In Fig. 12 ist die Ebene des Gewebes 10 strichpunktiert angedeutet. Die Zungenspitze kommt dem beheizbaren Draht 16 nahe, erstreckt sich bis zu dem unteren elektrischen Leiter 72 unterhalb der Gewebeebene. Vor allem beim Beginn des Webens hat die Zungenspitze die Aufgabe, die Randzonen der hinter dem beheizten Draht 16 entstehenden Streifen anzuheben, was gleichzeitig zueinander spiegelbildlich an benachbarten Streifen 20 geschieht. Zur besseren Führung dieser Randbereiche ist die Zunge 59 mit einer Delle 69 versehen, welche die Zungenspitze auch versteift. Die untergriffenen Randstreifen 22 werden hochgehoben und laufen bei der weiteren Bewegung 19 des Gewebes gegen die Seitenflächen des Halters, wo sie rechtwinklig emporgehoben und damit vorgefaltet werden. Die Zunge 59 und die Seitenflächen des Halters 71 fungieren als Leitflächen und wirken der Tendenz der Streifen 71 entgegen, sich unter der Gewebespannung mit ihren Schmelzkanten 23 nach unten zu wölben. Die Fertigfaltung und weitere Behandlung der Randbereich 22 erfolgt dann in dem sich daran anschließenden Kombinationswerkzeug 70, welches folgenden aus Fig. 15 und 16 ersichtlichen Aufbau hat.

Das Kombinationswerkzeug 70 besteht zunächst aus einer Basisplatte 80, die aus zwei Hälften zusammengesetzt ist, zwischen denen eine elektrisch erwärmte Heizpatrone 81 sitzt. Die Basisplatte ist mit hinterschnittenen Leisten 82 versehen, die ihr die Form einer T-Schiene 80 geben. Die T-Schiene 80 erstreckt sich über die ganze Breite des Gewebes und auf ihrer Oberseite liegen die Streifen 20 auf, die in Fig. 15 strichpunktiert angedeutet sind. Auf dieser T-Schiene sitzen besondere Schuhe 83, die ein weiterer Bestandteil des Kombinationswerkzeugs 70 sind und entlang der T-Schiene 80 verschiebbar sind, bis sie, wie aus Fig. 16 ersichtlich, in den Abstandsbereich zwischen zwei benachbarten Streifen 20 zu liegen kommen. Der Schuh 83 ist eine Baueinheit aus mehreren Einzelteilen und hat die Aufgabe, beide Randbereiche zu Faltschenkeln 25 fertig zu falten und durch Schmelzkleben am Bandkörper zu befestigen.

Dazu besteht der Schuh 83 zunächst aus einem annähernd U-förmig gebogenen Halteblech 84, dessen beide U-Enden umgebogen sind und Verbindungselemente 85 bilden, mit welchen die Baueinheit 83 über die vorspringenden Leisten 82 der T-Schiene 80 schnappt. Vor den Verbindungselementen 85 sind die U-Enden mit beidseitigen Ausschnitten 101 versehen, so daß beidendig des Schuhs schmale Führungsstege 86 entstehen, für eine den Schuh 83 durchziehende Preßplatte 87, die endseitig herausragt. Die Preßplatte 87 ist an ihren beiden herausragenden Enden jeweils mit einer Gabelöffnung 88 versehen, welche die Führungsstege 86 umgreift. Am vorderen Ende ist die Preßplatte 87 an ihrer Gabelöffnung 88 mit nach unten, gegen die T-Schiene 80, abgewinkelten Nasen 89 versehen, welche ebenfalls als Leitflächen beim Faltvorgang der Randbereiche 22 dienen.

Inmitten der Preßplatte 87 ist ein über weitere elektrische Leitungen 91 erwärmbarer Heizklotz 90 angeordnet, wofür die Platte mit einer U-förmigen Verkröpfung 92 versehen ist. Dort greift eine sich am Halteblech 84 abstützende Feder 83 an, welche bestrebt ist, die Preßplatte 87 gegen die Oberseite der T-Schiene 80 anzudrücken. Ist die Baueinheit 83 von der T-Schiene 80 mit ihren Verbindungselementen 85 gelöst, so stützt sich die Heizplatte 87 unter dem Federdruck 83 auf der Oberkante 94 derbeiden Ausschnitte 101 ab, welche die erwähnten Führungsstege 86 nach unten begrenzen. An der Oberseite des Heizklotzes 90 sitzt ein mit einer endseitigen Handhabe versehener Betätigungsbolzen 95, welcher eine Bohrung im oberen Bereich der U-Verkröpfung 92 sowie im Halteblech 84 durchsetzt. Auch der Heizklotz 90 ist durch eine Feder 96 in Richtung auf die T-Schiene 80 zu federbelastet, wobei diese Feder 94 die erwähnte Bohrung in der U-Verkröpfung 92 durchsetzt und sich ebenfalls an der Innenfläche des Halteblechs 84 abstützt. Der Heizklotz ist an seiner Unterfläche mit einer schmalen Andruckzone 97 versehen.

Zwischen den beiden Endabschnitten 98, 99 Preßplatte 87 sowie der Andruckzone 97 des Heizklotzes 90 einerseits und der Oberseite der T-Schiene 80 andererseits entsteht ein Durchlaß für die Streifenrandbereiche 22. Diese werden gleich im ersten Endabschnitt 98 der Preßplatte 87 zu den aus Fig. 16 ersichtlichen Faltschenkeln 25 fertig gefaltet und gegen den darunterliegenden Bandkörper angedrückt. Von dort aus kommen sie dann zu der beheizten Andruckzone 97 des Heizklotzes 90, die mit der ebenfalls, über die Heizpatrone 81, erwärmten T-Schiene schmelzwirksam auf das Fadenmaterial in den umgelegten Faltschenkel 25 einwirkt. Dort werden insbesondere die bereits im Zusammenhang mit Fig. 2 und 3 beschriebenen Sonderfäden 74 aus niedrig schmelzendem Material verflüssigt und zum Festkleben der beiden Schenkel 25 an den Bandkörper genutzt. Bei der weiteren Bewegung 19 des Gewebes gelangen die angeschmolzenen Faltschenkel 25 schließlich in den hinteren, mit 99 bezeichneten Abschnitt der Preßplatte 87, wo sie weiter angedrückt werden, und unter Abkühlung der Faltschenkel 25 die Klebeverbindung herstellen. Hinter dem Schuh 83 verläßt das Endprodukt, nämlich das fertige Etikettband 30, dieses Kombinationswerkzeug 70 und gelangt schließlich an die Abzugsstelle F von Fig. 11 mit den bereits beschriebenen Walzen 86, Rollen 87 und der Fixiereinrichtung 58.

Wie aus Fig. 11 weiter ersichtlich, sind die vom Heizkörper kommenden elektrischen Leitungen 91 in einer elektrischen Kontaktschiene 100 verbunden und werden von dort aus mit elektrischer Energie versorgt. Die Kontaktschiene 100 läßt die erwähnte Verschiebung der Schuhe 83 auf der T-Schiene 80 zu, um das Kombinationwerkzeug 70 auf die gegebene Breite der Streifen 20 zu justieren. Sofern die umzufaltenden Randbereiche 22 breiter oder schmaler ausgebildet werden sollen, braucht man nur die Baueinheiten 83 durch dementsprechend anders dimensionierte auszutauschen. Es können hierfür Schuhe 83 unterschiedlicher Ausbildung bereitgehalten werden, die im Bedarfsfall mit ihren Verbindungselementen 85 auf dieselbe T-Schiene 80 aufgeschnappt werden. Schließlich könnte das Kombinationswerkzeug 70 auch zu einer selbständigen Vorrichtung gehören, die von der Webmaschine unabhängig arbeitet. In diesem Fall erfolgt zwar das Weben A und Schmelzschneiden B von Fig. 11 auf der Webmaschine, doch das Falten und Befestigen der Randbereiche der erzeugten Streifen mit Werkzeug 70 auf einer eigenen Vorrichtung.

## Patentansprüche

1. Verfahren zum Herstellen einer Schar paralleler, insbesondere gemusterter, Etikettbänder (30) aus einer mit schmelzfähigen Fadenwerkstoffen (11, 12, 14') erzeugten textilen Breitbalm (10),
wobei die Breitbahn (10) unmittelbar nach ihrer Textilherstellung durch Schmelztrennschnitte (17)
wobei beidlängsseits der Schmelztrennschnitte (17) Schmelzkanten (23) an den einzelnen Streifen (20) entstehen, die ein Ausfransen der Fadenwerkstoffe (11, 12, 14, 14') verhindern,
**dadurch gekennzeichnet**,
daß die Streifen (20) zunächst ein Vorprodukt mit einer gegenüber der Bandbreite (39) des Etikettbands (30) größeren Streifenbreite (21) bilden und im Bereich künftiger Faltlinien (24) eine die spätere, kantenparallele Knickung (29) erleichternde Ausbildung (40, 40') erhalten, während die Faltlinien (24) nach dem Knicken (29) Faltscheitel (31) erzeugen, deren Abstand zueinander gleich der gewünschten Bandbreite (39) des fertigen Etikettbands (30) ist,
daß - nach dem Schmelztrennen, aber vor dem Abziehen (56) der aus der Breitbahn erzeugten Streifen, wenn die Streifen (20) noch unter der zur Textilherstellung der Breitbahn (10) erforderlichen Spannung stehen - die mit den Schmelzkanten (23) versehenen Randbereiche (22) der Faltlinien (24) zunächst umgeknickt (29) werden und dabei ein Paar von übereinanderliegenden Faltenschenkeln (25) bilden,
und daß schließlich die umgelenkten Faltschenkel (25) jeweils an die angrenzenden Bereiche (26) des darunterliegenden Bandkörpers (34) flach angedrückt und festgeklebt werden.

2. Verfahren nach Anspruch 1, dadurch gekennzeichnet, daß zur Erleichterung der Knickung (29) an den Faltlinien (24) die flottierend auf der Rückseite des Grundgewebes (15) verlaufenden Figurschüsse (14') in den Randbereichen (22, 40') entfernt werden.

3. Verfahren nach Anspruch 2, dadurch gekennzeichnet, daß die Figurschüsse (14') im Randbereich (22, 40') weggebrannt oder weggeschmolzen werden.

4. Verfahren nach einem oder mehreren der Ansprüche 1 bis 3, dadurch gekennzeichnet, daß zur Erleichterung der Knickung (29) an den Faltlinien (24) geschwächte Längszonen (42) in der Breitbahn (10) ausgebildet werden.

5. Verfahren nach Anspruch 4, dadurch gekennzeichnet, daß die geschwächten Längszonen (42) durch Weglassen von Fadenwerkstoffen in der Breitbahn (10) erzeugt werden.

6. Verfahren nach einem oder mehreren der Ansprüche 1 bis 5, dadurch gekennzeichnet, daß zur Erleichterung der Knickung (29) die Breitbahn (10) im Bereich der späteren Faltscheitel (31) als schlauchförmiges Gewebe (40) ausgebildet wird.

7. Verfahren nach einem oder mehreren der Ansprüche 1 bis 6, dadurch gekennzeichnet, daß beim textilen Herstellen der Breitbahn (10) ein oder mehrere Sonderfäden (74) aus Fadenmaterial mit niedriger Schmelztemperatur in diejenigen Längszonen eingearbeitet werden, in welchen das Festkleben der umgelegten Faltenschenkel (25) erfolgen soll.

8. Verfahren nach einem oder mehreren der Ansprüche 1 bis 6, dadurch gekennzeichnet, daß vor dem Umfalten (29) ein oder mehrere Schmelzfäden ins Falteninnere eingelegt werden.

9. Verfahren nach einem oder mehreren der Ansprüche 1 bis 8, dadurch gekennzeichnet, daß zum Befestigen der Faltenschenkel (25) zusätzliche Klebstoffe benutzt werden.

10. Verfahren nach einem oder mehreren der Ansprüche 1 bis 9, dadurch gekennzeichnet, daß das Etikettband (30) einer fixierenden Nachbehandlung (38) unterzogen wird und das Befestigen der Faltenschenkel (25) gleichzeitig mit dieser Nachbehandlung (38) ausgeführt wird.

11. Verfahren nach einem oder mehreren der Ansprüche 1 bis 10, dadurch gekennzeichnet, daß die Befestigung der Faltenschenkel (25) im wesentlichen nur durch ein erneutes Anschmelzen (23') und Andrücken (35) der Schmelzkante (23) ausgeführt wird.

12. Vorrichtung zur Durchführung des Verfahrens nach einem oder mehreren der Ansprüche 1 bis 11, mit einer Textilherstellungsmaschine,
welche eine Fadenbindungsstelle zum Herstellen der textilen Breitbahn (10) aufweist und eine Schar von in seitlichem Abstand zueinander angeordneten Schmelzschneidern (16) besitzt, welche die Breitbahn (10) in eine Schar parallel nebeneinander liegender Streifen (20) zerlegen,
**dadurch gekennzeichnet**,
daß die Schmelzschneider (16) in einem Abstand (18) zueinander angeordnet sind, der größer als die gewünschte Breite (39) des Etikettbands (30) ist
und daß zwischen den Schmelzschneidern (16) und dem Warenabzug (56) einerseits Randfalteinrichtungen (46) angeordnet sind, die zum kantenparallelen Umknicken (29) der beiden mit den Schmelzkanten (23) versehenen Randbereiche (22) eines jeden Streifens (20) dienen,
und andererseits Preß- und Klebeeinrichtungen (44, 45; 54, 55; 33; 62) vorgesehen sind, die im Bereich der umgelegten Faltenschenkel (25) angreifen.

13. Vorrichtung nach Anspruch 12, dadurch gekennzeichnet, daß die Klebeeinrichtungen aus Heizgliedern (60) bestehen, welche wenigstens einen Teil (74) des Fadenmaterials im Bereich der umgelegten Streifenränder (22) zum Schmelzen bringen.

14. Vorrichtung nach Anspruch 12 oder 13, dadurch gekennzeichnet, daß die Randfalteinrichtungen einerseits Leitflächen (59) zum Vorfalten und andererseits Werkzeuge (98) zum Fertigfalten der Randbereiche (22) aufweisen.

15. Vorrichtung nach Anspruch 14, dadurch gekennzeichnet, daß die Leitflächen (59) zum Vorfalten an eine zur Positionierung des Schmelzschneiders (16) dienenden Halter (71) angeordnet sind.

16. Vorrichtung nach Anspruch 14 oder 15, dadurch gekennzeichnet, daß die Leitfläche eine vom Halter (71) abragende profilierte Zunge (59) besitzt.

17. Vorrichtung nach einem oder mehreren der Ansprüche 12 bis 16, dadurch gekennzeichnet, daß wenigstens Teile der Randfalteinrichtungen zusammen mit den Preß- und Klebeeinrichtungen ein Kombinationswerkzeug (70) bilden, bestehend aus
einerseits einer federnd gegen eine Basisplatte (80) drückbaren Preßplatte (87) und andererseits aus einem ebenfalls gegen die Basisplatte (80) federnd andrückbaren Heizklotz (90), zwischen denen ein Durchlaß für den Streifenrandbereich (22) mit den umgelegten Faltenschenkeln (25) entsteht.

18. Vorrichtung nach Anspruch 17, dadurch gekennzeichnet, daß die federbelastete Preßplatte (87) zusammen mit dem Heizklotz (90) eine Baueinheit (Schuh 83) bildet und die Basisplatte (80) eine durchgehende Schiene ist, auf welcher eine Vielzahl von Baueinheiten (Schuh 83) sitzen und in ihrem Abstand zueinander entlang der Schiene (80) einstellbar sind.

19. Vorrichtung nach einem oder mehreren der Ansprüche 12 bis 18, dadurch gekennzeichnet, daß die Randfalt-, Preß- und Klebeeinrichtungen für die Behandlung der Randbereiche (22) von zwei in der Vorrichtung nebeneinander liegenden Streifen (20) zu einem gemeinsamen Kombinationswerkzeug (70) zusammengefaßt sind.

20. Vorrichtung nach Anspruch 18 oder 19, dadurch gekennzeichnet, daß die Baueinheit (Schuh 83) durch Schnappverbindungselemente (85) mit der schienenförmigen Basisplatte (80) verbunden sind.

## Claims

1. Procedure to produce a set of parallel, especially patterned label bands (30) made of a textile broad web (10) made of meltable thread materials (11, 12, 14, 14'):
the broad web (10) directly following its textile production being dissected by fusion separating cutting (17) into a number of tapes (20) adjacent to each other,
whereby melting edges (23) develop at the individual tapes (20) along both sides of the fusion separating cuts (17) which prevent fraying of the thread materials (11, 12, 14, 14'),
**characterized**
by the tapes (20) initially being a preproduct with a larger tape width (21) as opposed to the label width (39) of the label band (30) and featuring a formation (40, 40') in the region of future folding lines (24) facilitating later folding parallel to the edges (29) while the folding lines (24) after folding (29) generate folding summits (31) whose distance to each other is identical with the desired band width (39) of the finished label band (30),
and characterized by - after fusion cutting but before unreeling (56) the tapes produced from the broad web when the tapes are still in the condition of tension required for textile production of the broad web (10) - the edge sectors (22) of the folding lines (24) featuring the melting edges (23) first are folded (29) thereby forming a pair of superimposed folding legs (25), and that finally the deviated folding legs (25) respectively are flatly pressed and glued against the adjacent sectors (26) of the subjacent band (34).

2. Method in compliance with claim 1 characterized by the pattern wefts (14') floating on the back side of the ground fabric (15) being removed in the edge sectors (22, 40') to facilitate folding (29) at the folding lines (24).

3. Method in compliance with claim 2 characterized by the pattern wefts (14') in the edge sectors (22,40') being removed by burning or melting.

4. Method in compliance with one or several of claims 1 to 3 characterized by weakened longitudinal zones (42) developed in the broad web (10) to facilitate folding (29) at the folding lines (24).

5. Method in compliance with claim 4 characterized by these weakened longitudinal zones (42) made by omittance of thread materials in the broad web (10).

6. Method in compliance with one or several of the claims 1 to 5 characterized by the broad web (10) designed as tubular banding (40) to facilitate folding (29) the broad web (10) in the area of the later folding summits (31).

7. Method in compliance with one or several of the claims 1 to 6 characterized by one or several special threads (74) made of thread material with a low melting temperature during textile production of the broad web (10) being integrated into those longitudinal zones, in which glueing of the folded folding legs is to occur (25).

8. Method in compliance with one or several of claims 1 to 6 characterized by one or several melting threads being inserted into the inner part of the crease before folding (29).

9. Method in compliance with one or several of claims 1 to 8 characterized by additional adhesive being used to fasten the folding legs (25).

10. Method in compliance with or several of claims 1 to 9 characterized by the label band (30) being subjected to a subsequent fixation treatment (38) and by fastening of the folding legs (25) being performed simultaneously with this subsequent treatment (38).

11. Method in compliance with one or several of claims 1 to 10 characterized by fastening of the folding legs (25) essentially only being performed by renewed melting (23') and pressing (35) of the melting edge (23).

12. Facility to perform the method in compliance with one or several of the claims 1 to 11 with a textile producing machine,
which features a thread binding device for production of the textile broad web (10) and a number of melting cutters (16) arranged laterally to each other, which dissect the broad web (10) into a number of tapes (20) laterally parallel to each other,
**characterized**
by the melting cutters (16) being positioned in a distance to each other larger than the desired width (39) of the label tape (30) and
by edge folding devices (46) for longitudinal folding (29) of both edge sectors (22) of each tape (20) featuring melting edges (23) located between the melting cutters (16) and the band roll (56) on one hand, and
on the other hand pressing and glueing devices (44, 45; 54, 55; 33; 62) being planned in the area of the folded folding legs (25).

13. Device in compliance with claim 12 characterized by the glueing devices consisting of heating elements (69) which melt at least a part (74) of the thread material in the sector of the folded tape edges (22).

14. Device in compliance with claim 12 or 13 characterized by the edge folding devices featuring guide vanes (59) for prefolding, and tools (98) for entirely folding the edge areas (22).

15. Device in compliance with claim 14 characterized by the guide vanes (59) for prefolding being located at a mount assembly (71) used to position the fusion cutter (16).

16. Device in compliance with claim 14 or 15 characterized by the guide vane featuring a profiled latch (59) protruding from the mount assembly (71).

17. Device in compliance with one or several of claims 12 to 16 characterized by at least parts of the edge folding device forming a combination tool (70) together with the pressing and glueing devices consisting of
on one hand a press plate (87) which may be pressed against a base plate (80) with spring mounting and on the other hand a heating block (90) which also may be pressed against the base plate (80) with spring mounting, which are mounted in such a fashion to provide for a passage for the tape edge sector (22) with the folded folding legs (25).

18. Device in compliance with claim 17 characterized by the spring-loaded pressing plate (87) together with the heating block (90) forming a construction unit (shoe 83) and the base plate (80) being a continuous rail featuring a number of construction units (shoe 83) which are adjustable along the rail (80) in reference to their location to each other.

19. Device in compliance with one or several of the claims 12 to 18 characterized by the edge folding, pressing, and glueing devices for treatment of the edge sectors (22) of two tapes (20) located next to each other in the device being united in a joint combination tool (70).

20. Device in compliance with claim 18 or 19 characterized by the construction unit (shoe 83) being connected to the rail-shaped base plate (80) by snap connection elements (85).

## Revendications

1. Procédé de fabrication d'un ensemble de bandes parallèles d'étiquettes (30), en particulier avec motifs, à partir d'un ruban textile large (10) confectionné à l'aide de matériaux filaires fusibles (11, 12, 14, 14'),
le ruban large (10) étant refendu en bandes coupées par fusion (17) immédiatement après la fabrication du textile, lesdites bandes formant un ensemble de bandes parallèles (20),
des bords fondus (23) se formant contre chaque bande (20) le long des deux côtés des découpes par fusion (17), lesdits bords empêchant un effilochage des matériaux filaires (11, 12, 14, 14'),
**caractérisé en ce que**
les bandes (20) forment d'abord un préproduit d'une largeur de bande (21) supérieure à la largeur (39) de la bande d'étiquette (30) et reçoivent dans la zone des futures lignes de pli (24) une conformation (40, 40') facilitant le repli ultérieur (29) à bords parallèles, tandis que les lignes de pli (24) une fois repliées (29) forment des raies de pliage (31) dont l'écartement réciproque équivaut à la largeur (39) que l'on veut donner à la bande d'étiquettes finie (30),
en ce qu'après le découpage par fusion mais avant la séparation (56) des bandes confectionnées dans la bande large, les bandes (20) se trouvent encore sous la tension mécanique nécessaire au tissage de la bande large (10), les zones marginales (22) dotées de bords fondus (23) des lignes de pli (24) étant d'abord repliées (29) et formant ce faisant une paire de bandes repliées (25) superposées,
et en ce que finalement les bandes ainsi repliées (25) sont compressées à plat contre les zones limitrophes (26) du corps de bande situé sous elles (34) puis sont fermement collées.

2. Procédé selon revendication 1, caractérisé en ce que pour faciliter le pliage (29) au niveau des lignes de pli (24), les duites de figure (14') montées flottantes au dos du tissu de base (15) sont retirées dans les zones marginales (22, 40').

3. Procédé selon revendication 2, caractérisé en ce que les duites de figure (14') situées dans la zone marginale (22, 40') sont enlevées par combustion et fusion.

4. Procédé selon l'une ou plusieurs des revendications 1 à 3, caractérisé en ce que pour faciliter le pliage (29) au niveau des lignes de pli (24), des zones longitudinales (42) sont conformées fragilisées dans la bande large (10).

5. Procédé selon revendication 4, caractérisé en ce que ces zones longitudinales (42) sont fragilisées en omettant d'intégrer des matériaux filaires dans la bande large (10).

6. Procédé selon l'une ou plusieurs des revendications 1 à 5, caractérisé en ce que pour faciliter le pliage (29), la bande large (10) se présente sous la forme d'un tissu flexible (40) dans la zone de la future raie de pliage (31).

7. Procédé selon l'une ou plusieurs des revendications 1 à 6, caractérisé en ce que lors du tissage de la bande large (10), un ou plusieurs fils spéciaux (74) en matériau filaire à faible température de fusion est/sont intégré(s) dans les zones longitudinales dans lesquelles doit avoir lieu le collage des bandes repliées (25).

8. Procédé selon l'une ou plusieurs des revendications 1 à 6, caractérisé en ce qu'avant le pliage (29), un ou plusieurs fils fusibles sont introduits à l'intérieur du pli.

9. Procédé selon l'une ou plusieurs des revendications 1 à 8, caractérisé en ce que pour fixer les bandes de repli (25) on utilise des colles supplémentaires.

10. Procédé selon l'une ou plusieurs des revendications 1 à 9, caractérisé en ce que la bande d'étiquettes (30) est soumise à un post-traitement fixateur (38) et que la fixation des bandes de repli (25) a lieu en même temps que ce post-traitement (38).

11. Procédé selon l'une ou plusieurs des revendications 1 à 10, caractérisé en ce que la fixation des bandes de repli (25) est essentiellement réalisée par une nouvelle fusion (23') et par l'exercice d'une pression (35) sur le bord fondu (23).

12. Dispositif de réalisation du procédé selon l'une ou plusieurs des revendications 1 à 11, à l'aide d'une machine de tissage,
laquelle présente un point de liaison des fils pour fabriquer la bande textile large (10) et un ensemble de couteaux à fusion (16) disposés écartés les uns des autres qui refendent la bande large (10) en un ensemble de bandes parallèles (20),
caractérisé en ce que
les couteaux à fusion (16) sont disposés écartés les un des autres à une distance (18) supérieure à la largeur (39) que l'on désire donner à la bande d'étiquettes (30),
et qu'entre les couteaux de fusion (16) et l'extracteur (56) d'une part sont disposés des dispositifs de pliage de bord (46) qui servent à replier (29) parallèlement les deux zones marginales (22) à bords fondus (23) de chaque bande (20),
et que d'autre part des dispositifs de pressage et de collage (44, 45; 54, 55; 33; 62) sont prévus qui interviennent dans la zone de la bande de repli rabattue (25).

13. Dispositif selon revendication 12, caractérisé en ce que les dispositifs de collage se composent d'organes chauffants (60) portant au point de fusion au moins une partie (74) du matériau filaire situé dans la zone des bords (22) de bande repliés.

14. Dispositif selon revendication 12 ou 13, caractérisé en ce que les dispositifs de pliage des bords comportent d'une part des surfaces-guides (59) servant au pré-pliage et d'autres part des outils (98) permettant de finir de plier les zones marginales (22).

15. Dispositif selon revendication 14, caractérisé en ce que les surfaces-guides (59), pour réaliser le pré-pli, sont disposées contre un support (71) servent à positionner le couteau de fusion (16).

16. Dispositif selon les revendications 14 ou 15, caractérisé en ce que la surface-guide comporte une languette profilée (59) saillant du support (71).

17. Dispositif selon l'une ou plusieurs des revendications 12 à 16, caractérisé en ce qu'au moins des parties des dispositifs de pliage des bords forment, en association avec les dispositifs de pressage et de collage, un outil combiné (70) comprenant
d'une part une plaque presseuse (87) pressable élastiquement contre une plaque de base (80) et d'autre part un bloc chauffant (90) lui aussi pressable élastiquement contre la plaque de base (90) entre lesquels se forment un guichet de passage de la zone à bords de bande (22) comportant les bandes de repli rabattues (25).

18. Dispositif selon revendication 17, caractérisé en ce que la plaque presseuse (87) et le bloc chauffant (90) forment une unité constructive (sabot 83) et que la plaque de base (80) est un rail continu sur lequel reposent un grand nombre d'unités constructives (sabot 83) dont l'écartement réciproque est réglable sur le rail (80).

19. Dispositif selon l'une ou plusieurs des revendications 12 à 18, caractérisé en ce que les dispositifs de pliage des bords, de pressage et de collage sont réunis ensemble en outil combiné (70) pour traiter les zones marginales (22) de deux bandes (20) reposant côte à côte dans le dispositif.

20. Dispositif selon revendication 18 ou 19, caractérisé en ce que l'unité constructive (sabot 83) est relié à la plaque de base (80) en forme de rail par des éléments de liaison (85) par encliquetage.
